# EUROPEAN PATENT SPECIFICATION

(11) **EP 1 398 798 B1**
(45) Date of publication and mention of the grant of the patent: **26.04.2006**
(21) Application number: 03255747.2
(22) Date of filing: 15.09.2003
(51) Int. Cl.: H01B 3/18

(54) **Improvements relating to cable enclosures and to fire retardant materials**
Verbesserungen für Kabelgehäuse und flammhemmende Materialien
Améliorations concernant des enceintes de câbles et des matériaux ignifugés

(30) Priority: 14.09.2002 GB 0221349
(43) Date of publication of application: 17.03.2004
(73) Proprietor: Kourgli, Mokhtar, Beverley, Humberside HU17 8UQ (GB)
(72) Inventor: Kourgli, Mokhtar, Beverley, Humberside HU17 8UQ (GB)
(74) Representative: Jones, Stephen Anthony

(56) References cited:
- EP-A- 0 076 560
- EP-A- 0 393 959
- WO-A-98/12253
- GB-A- 1 519 781
- US-A- 4 407 992

## Description

This invention relates to improvements in cable enclosures and to fire retardant materials, and in particular to improvements in fire retardant cable guards and cable troughs.

Cables are often required to run alongside highways, railway lines etc or in other places where there is a risk of a nearby fire. These cables therefore need to be protected in the event of a fire. Conventionally, such cables are enclosed within cable troughs which are sunk into the ground or between cable guards and the substrate to which the cable guard is fixed, such as the wall of a tunnel or a concrete floor.

Conventionally, cable troughs and cable guards are formed in a fire retardant or resistant material such as steel, polycarbonate or concrete. Steel and polycarbonate are relatively expensive, and concrete products are heavy and unwieldy.

It is known to incorporate fire retardant additives into plastics materials, but such additives must either be used in high amounts to achieve satisfactory results or have adverse environmental effects, or are unsatisfactory for other reasons.

EP 0393959 discloses a frame-retardant polymer composition with a calcium carbonate filler of particle size less than 50 µm.

There have now been devised an improved cable enclosure and fire retardant material which overcome or substantially mitigate the above-mentioned and/or other disadvantages associated with the prior art.

According to a first aspect of the invention, there is provided a cable enclosure comprising a passageway for receiving a cable, wherein the cable enclosure is formed in a fire retardant material comprising a plastics material and particles of inorganic material comprising calcium carbonate with an average particle size in the range 0.5 to 1.2mm.

According to a further aspect of the invention, there is provided a fire retardant material comprising a plastics material and particles of an inorganic material comprising calcium carbonate with an average particle size in the range 0.5 to 1.2mm.

Cable enclosures and fire retardant materials according to the invention are advantageous principally because they are less expensive to manufacture than conventional fire retardant materials and fire retardant cable enclosures. This is due to plastics material being cheaper than fire retardant materials such as steel that are conventionally used. In addition, particles comprising calcium carbonate and being of a suitable size can be obtained readily and inexpensively, eg as reject chalk from quarries, thereby helping to keep manufacturing costs low. The chalk material is environmentally friendly. Furthermore, the cable enclosures are robust enough to withstand the static and dynamic loads to which they are subjected in use.

The particles of inorganic material preferably consist predominantly of calcium carbonate, eg comprising more than 80%, more preferably more than 90% or more than 95% by weight of calcium carbonate. Forms of inorganic material that may be used include chalk, limestone, marble and calcite.

By "fire retardant" is meant that when the material is ignited in a flame of a Bunsen burner and the material is then withdrawn from the flame, the material extinguishes itself in less than 2 minutes, more preferably less than 60 seconds, and may be as little as 10 seconds or less.

The proportion of particles in the fire retardant material is typically in the range 5% to 70% by weight, preferably in the range 10% to 40% by weight and most preferably in the range 15% to 20% by weight.

The plastics material may be formed from a single plastics material or a mixture of plastics materials. Suitable plastics materials include polyolefins, though other plastics, eg polyvinylchoride containing 8-10% acrylic, may also be used. Suitable polyolefins include polyethylene and polypropylene. The polyolefin is preferably a mixture of polyethylene and polypropylene, each of which is preferably present in proportions of 25 to 65% by weight. Typically, the fire retardant material may include approximately equal amounts, say 30 to 50% by weight, of low-density polyethylene and polypropylene, and may also include high-density polyethylene, eg in an amount of 5 to 25 % by weight.

In order to further reduce manufacturing cost, the plastics material may be recycled plastics. Suitable recycled plastics include post-consumer waste plastics materials, eg those comprising principally polyolefin materials.

Components or the cable enclosure that are elongate and of uniform cross-section may be formed by a conventional extrusion process, or by the process referred to as intrusion moulding, which is described in GB 1603381, or a variant thereof. Other components may be formed by injection moulding.

In all such processes, the components of the fire retardant material are firstly mixed, preferably in a Banbury mixer with an internal mixing chamber, so as to form a molten material ready for extrusion or moulding. The mixing is preferably such as to ensure that the particles of inorganic material are distributed homogeneously throughout the material.

The molten material is then pumped at a pressure of preferably between 80 and 160 bar, into a mould which defines the shape of the cable enclosure. The mould may have an open distal end so that some of the molten material is allowed to escape through this open end. Once the mould is completely filled, the mould is typically cooled and the cable enclosure is removed from the mould.

The molten material introduced into the mould may include an expansion or blowing agent, which expands and assists in causing the material to take up the internal shape of the mould. However, such an expansion agent may not be required.

The cable enclosure may be a cable guard. The passageway of the cable guard preferably has an opening along its length so that a cable may be positioned within the passageway. The cable guard preferably further includes means of fixing the cable guard to a suitable substrate, such as a wall or floor. Such means may comprise high security or vandal-proof fixings passed through the cable enclosure and into the substrate. When such a cable guard is fixed to a suitable substrate, in use, the opening of the passageway is preferably sealed by the substrate so that the cable is enclosed between the cable guard and the substrate. The cable guard is preferably between 0.5 and 2m in length and, in use, many cable guards may be used in abutting relationship. A particularly preferred embodiment comprises a hemi-cylindrical passageway and a flange integrally formed along each of the longitudinal edges of the hemi-cylindrical passageway.

Alternatively, the cable enclosure may be a cable trough. The cable trough preferably comprises a passageway of between 0.5 and 2m in length, with an opening along its length, and a closure for that opening. In use, the passageway is typically sunk in the ground, the cables are positioned within the passageway and the closure is engaged with the passageway, such that the passageway is sealed and the closure is at ground level. Several cable troughs may be used in abutting relationship with each other. In such a case, the ends of the cable troughs may include cooperating formations so that abutting cable troughs may engage one another. Additionally, the exterior of the passageway of the cable trough may include an outwardly extending formation which provides an anchor, in use, for the cable trough within the ground.

In addition to its use in cable enclosures, the fire retardant material according to the invention may be used in the manufacture of other articles such as manholes, drains, paving elements, etc.

The invention will now be described in greater detail, by way of illustration only, with reference to the accompanying drawings, in which
Figure 1 is a perspective view of a cable guard according to the present invention;
Figure 2 is a plan view of the cable guard;
Figure 3 is an end view of the cable guard;
Figure 4 is perspective view of a trough forming part of a cable trough according to the present invention;
Figure 5 is a plan view of the trough;
Figure 6 is an end view of the trough;
Figure 7 is a plan view, showing hidden detail, of a lid which forms part of a cable trough according to the present invention;
Figure 8 is a side view of the lid;
Figure 9 is an end view of the lid; and
Figure 10 is a perspective view of a T-piece trough which forms part of a T-piece cable trough according to the present invention.

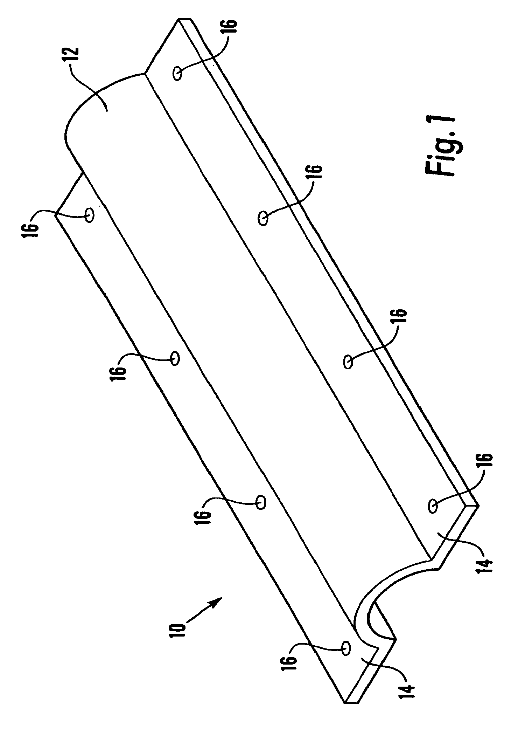

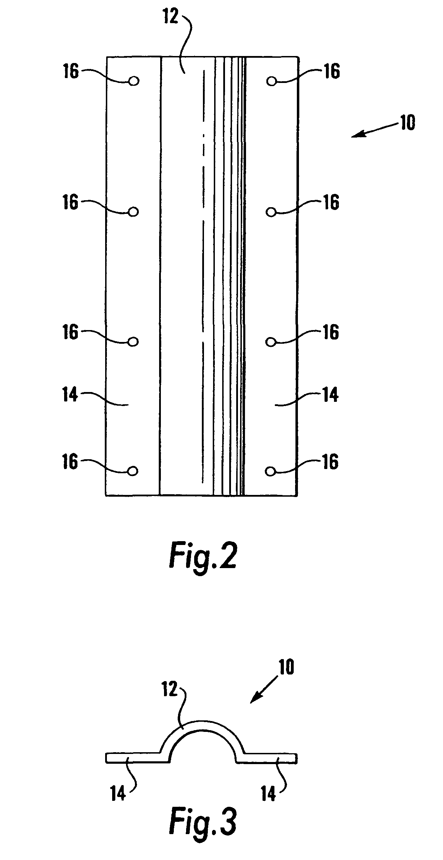

Figures 1, 2 and 3 each show a cable guard according to the present invention which is generally designated 10. The cable guard 10 is approximately 1000mm in length and 350mm in width, and comprises a hemi-cylindrical portion 12 and a rectangular flange 14 integrally formed along each of the longitudinal edges of the hemi-cylindrical portion 12. The flanges 14 each include four equally spaced apart bore-holes through which fasteners (not shown in Figures 1-3) may be passed to fix the cable guard 10 to a suitable substrate such as the wall of a tunnel or a concrete floor.

In use, the required number of cable guards are fixed, as described above, to a suitable substrate such as a wall in abutting relationship to one another so as to define a closed passageway between the hemi-cylindrical portions of the cable guards and the wall. Either prior to the fixing of each guard to the wall, or subsequently, one or more cables (not shown in the Figures) are positioned within this passageway.

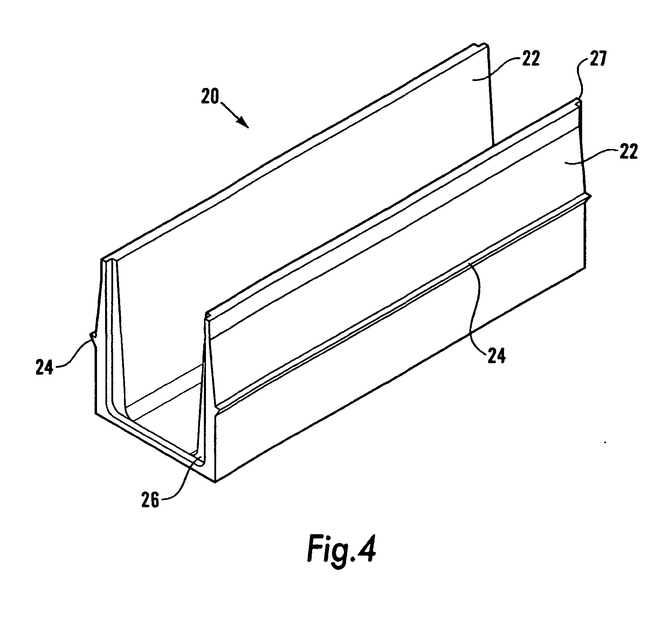

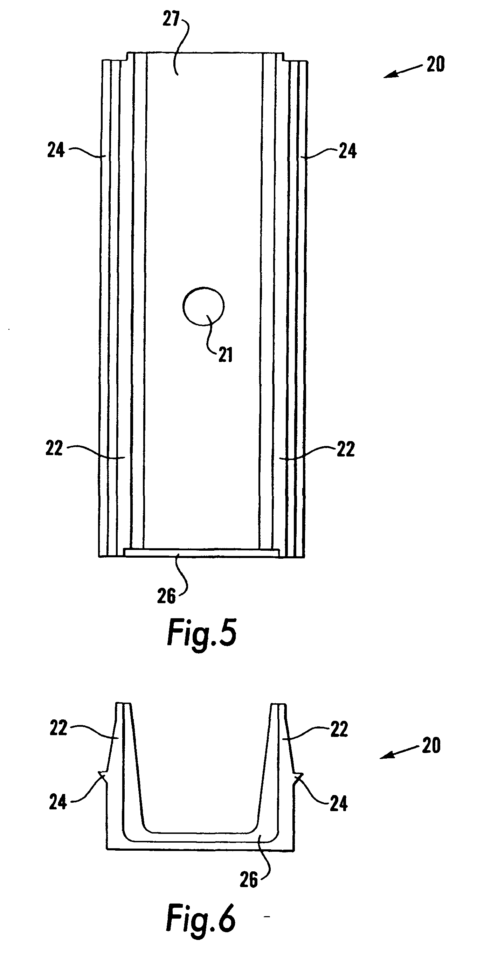

Figures 4, 5 and 6 each show a trough which is generally designated 20 and forms part of a cable trough according to the present invention. The trough 20 is approximately 1125mm in length and 350mm in width, and has a generally U-shaped cross-section. The trough 20 has a flat base and two side walls 22 orientated generally perpendicularly to the base of the trough 20 which together define a channel for receiving cables. The base of the trough 20 also includes a centrally positioned drainage hole 21, as shown in Figure 5.

The side walls 22 gradually reduce in thickness from the closed lower end to the open upper end of the trough 20 (as viewed in Figures 4 and 6) such that the width of the channel gradually increases from the lower end to the upper end of the channel. The side walls 22 each have an exterior surface comprising a lower half orientated generally perpendicularly to the base and an upper half which tapers inwardly towards the upper end of the trough 20.

Along the entire length of the trough 20, positioned between the above described lower and upper halves of the exterior surface of each side wall 22, the trough 20 includes a longitudinal rib 24. This longitudinal rib 24 extends outwardly from the side wall 22, and has an upper surface which is generally parallel to the base of the trough 20 and an undercut lower surface, as shown in Figure 6. The longitudinal rib 24 therefore acts as an anchor for the cable trough when it is in the ground, in use.

One end of the trough 20 is formed with a U-shaped recess 26 of approximately 2cm depth, as shown most clearly in Figure 4. The other end of the trough 20 is formed with a protruding portion 27 which corresponds generally in shape and dimensions to the recess 26 such that, when a number of troughs 20 are arranged in a line, the protruding portion 27 of one trough may be closely received within the recess 26 of the next trough 20. In this way, a series of troughs 20 may be engaged with each other so as to form a trough of increased length. The protruding portion 27 is of slightly smaller dimension than the recess 26, to permit the line of troughs to be laid with a slight degree of curvature.

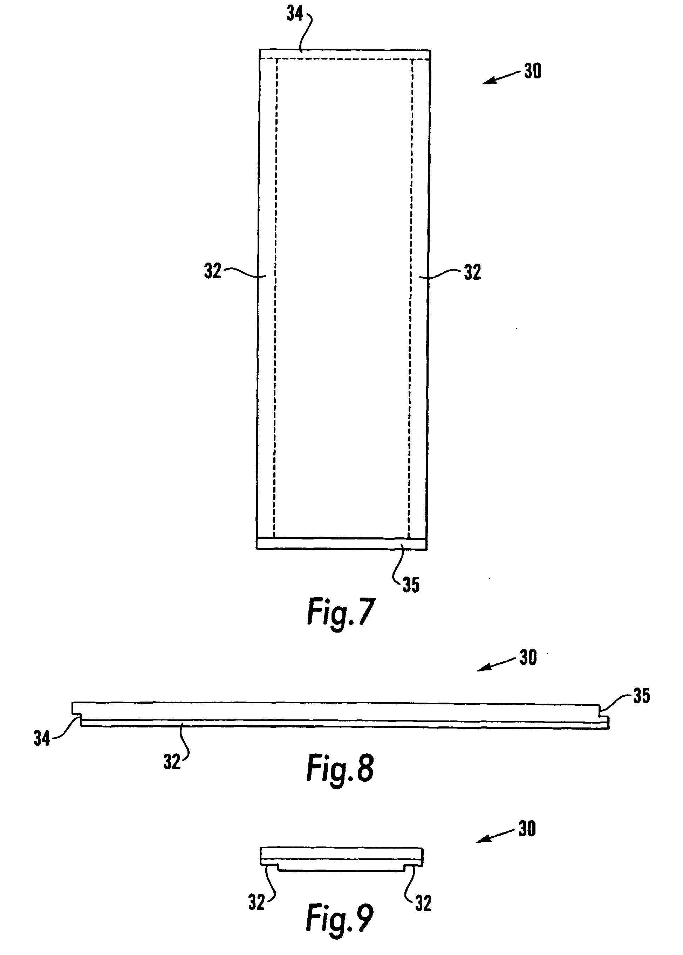

Figures 7, 8 and 9 show a lid which is generally designated 30 and engages the upper end of the trough 20 to form a cable trough according to the present invention. The lid 30 is a rectangular plate of approximately 1125mm length, 320mm width and 45mm depth. The width of the lid 30 corresponds to the width of the upper end of the trough 20 and the length of the lid 30 corresponds to the length of the trough 20 such that the lid rests on the side walls 22 and covers the open upper end of the channel.

The underside of the lid 30 includes longitudinal recesses 32 of approximately 10mm depth and a position and width which corresponds generally to the upper surface of the side walls 22 so that the recesses 32 engage the side walls 22 of the trough 20. The fitting of the lid 30 to the trough 20 is slightly loose, to accommodate a small degree of curvature in a line of troughs 20, if desired.

In addition, one end of the lid 30 includes a transverse rectangular recess 34 on its underside and the other end of the lid 30 includes a transverse rectangular recess 35 on its upper surface, as shown in Figure 8. This allows a series of lids 30 to engage each other with overlapping ends, in a similar manner to the series of troughs 20 described above.

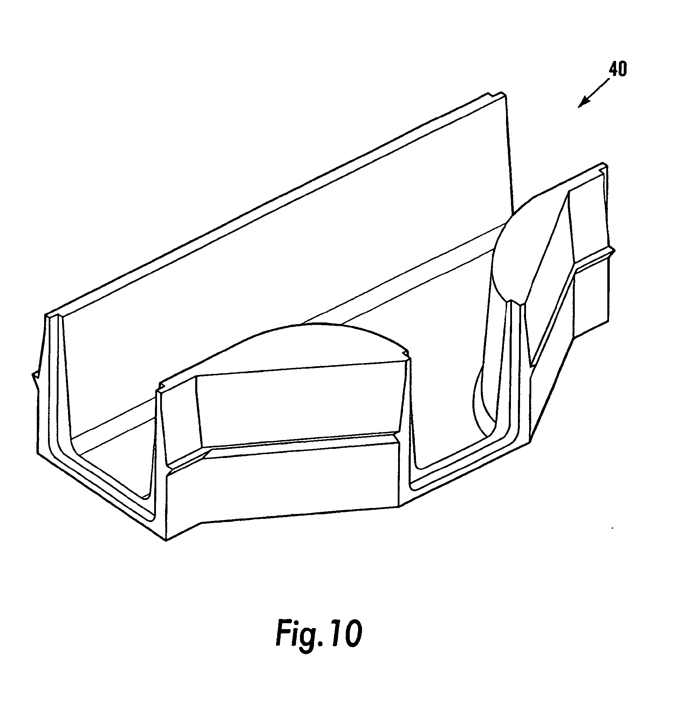

Figure 10 shows a T-piece trough which is generally designated 40 and, together with a corresponding lid (not shown), forms a T-piece cable trough according to the present invention. The T-piece trough 40 is similar to the trough 20 described above save that the T-piece trough 40 has a further channel branching perpendicularly from the T-piece trough 40. This channel has an end which is identical to the end of trough 20 that includes a U-shaped recess 26.

The interior of the T-piece trough 40 therefore defines a generally T-shaped channel and the T-piece trough 40 has three ends which may be engaged with other cable troughs.

In use, channels are dug in the ground along the path that the cables are to take and a suitable number of troughs 20, including T-piece troughs 40 where appropriate, are placed within these channels so that they engage each other as described above. The troughs 20,40 are positioned so that when the lids 30 are in place, the lids 30 will be at ground level. The ground is then closely packed around the sunken troughs 20,40 to hold them in place. One or more cables (not shown) are positioned within the channels formed by the troughs 20,40 and the lids 30 are then engaged with the troughs 20,40 and each other, thereby sealing the cables from the surface.

The cable guard 10, cable trough including trough 20 and lid 30, and T-piece cable trough 40 described above are all formed in a plastics material by moulding. The moulding process may be generally conventional injection moulding. Alternatively, a process similar to the intrusion moulding process referred to above may be used. In some cases, an extrusion process may be employed.

The plastics material used has the following composition:

| | |
|---|---|
| Low density polyethylene | 35% w/w |
| Polypropylene | 35% w/w |
| High density polyethylene | 15% w/w |
| Chalk | 15% w/w |

The chalk in the above composition is quarry reject chalk with an average particle size of 0.5 to 1.2mm and a maximum particle size of 5mm. The percentage by weight of chalk in the composition may be increased so as to give the article a higher density, avoiding problems of buoyancy for example. For cable troughs and cable guards, the presently preferred proportion of chalk is between 15 and 20% by weight, although up to 70% by weight may be used before the trough or guard becomes too heavy for use.

The components of the plastics material described above are mixed in a Banbury mixer, which has an internal mixing chamber, so as to form a molten material ready for moulding.

The molten material is then pumped at a pressure of 120 bar into a mould which defines the shape of the particular article being formed. The pressure at which the molten material is introduced into the mould causes the molten material to fill the entire mould, and gases present in the mould or molten material are forced out. The removal of these gases from the molten material prevents porosity of the finished article which could lead to structural weakness.

Once the mould is completely filled, the mould is cooled and the finished article is removed from the mould.

## Claims

1. A cable enclosure comprising a passageway for receiving a cable, wherein the cable enclosure is formed in a fire retardant material comprising a plastics material and particles of inorganic material comprising calcium carbonate with an average particle size in the range 0.5 to 1.2mm.

2. A fire retardant material comprising a plastics material and particles of an inorganic material comprising calcium carbonate with an average particle size in the range 0.5 to 1.2mm.

3. A cable enclosure as claimed in Claim 1 or fire retardant material as claimed in Claim 2, wherein the inorganic material is selected from the group consisting of chalk, limestone, marble and calcite.

4. A cable enclosure or fire retardant material as claimed in Claim 3, wherein the proportion of particles in the fire retardant material is in the range 10% to 40% by weight, more preferably in the range 15% to 20% by weight.

5. A cable enclosure or fire retardant material as claimed any preceding claim, wherein the plastics material comprises one or more polyolefins.

6. A cable enclosure or fire retardant material as claimed any preceding claim, wherein the plastics material comprises post-consumer waste plastics materials.

## Patentansprüche

1. Kabelgehäuse, umfassend einen Durchgang zum Aufnehmen eines Kabels, wobei das Kabelgehäuse aus einem feuerhemmenden Material gebildet ist, das ein Plastikmaterial und Teilchen von Calciumcarbonat umfassendem anorganischem Material mit einer durchschnittlichen Teilchengröße im Bereich von 0,5 bis 1,2 mm umfasst.

2. Feuerhemmendes Material, das ein Plastikmaterial und Teilchen eines Calciumcarbonat umfassenden anorganischen Materials mit einer durchschnittlichen Teilchengröße im Bereich von 0,5 bis 1,2 mm umfasst.

3. Kabelgehäuse nach Anspruch 1 oder feuerhemmendes Material nach Anspruch 2, bei dem das anorganische Material aus der aus Kreide, Kalk, Marmor und Calcit bestehenden Gruppe ausgewählt ist.

4. Kabelgehäuse oder feuerhemmendes Material nach Anspruch 3, bei dem der Teilchenanteil in dem feuerhemmenden Material im Bereich von 10 Gewichtsprozent bis 40 Gewichtsprozent, vorzugsweise im Bereich von 15 Gewichtsprozent bis 20 Gewichtsprozent, liegt.

5. Kabelgehäuse oder feuerhemmendes Material nach einem der vorhergehenden Ansprüche, bei dem das Plastikmaterial wenigstens ein Polyolefin umfasst.

6. Kabelgehäuse oder feuerhemmendes Material nach einem der vorhergehenden Ansprüche, bei dem das Plastikmaterial Verbraucherabfallplastikmaterialien umfasst.

## Revendications

1. Enceinte de câbles comportant un passage permettant de recevoir un câble, dans laquelle l'enceinte de câbles est formée à partir d'un matériau ignifugé comportant une matière plastique et des particules de matière inorganique comportant du carbonate de calcium ayant une dimension moyenne des particules de l'ordre de 0,5 à 1,2 mm.

2. Matériau ignifugé comportant une matière plastique et des particules d'une matière inorganique comportant du carbonate de calcium ayant une dimension moyenne des particules de l'ordre de 0,5 à 1,2 mm.

3. Enceinte de câbles selon la revendication 1 ou matériau ignifugé selon la revendication 2, dans lesquels le matériau inorganique est sélectionné dans un groupe constitué de craie, de calcaire, de marbre et de calcite.

4. Enceinte de câbles ou matériau ignifugé selon la revendication 3, dans lesquels la proportion de particules dans le matériau ignifugé est de l'ordre de 10 % à 40 % du poids, encore plus de préférence de l'ordre de 15 % à 20 % du poids.

5. Enceinte de câbles ou matériau ignifugé selon l'une quelconque des revendications précédentes, dans lesquels la matière plastique comporte un ou plusieurs polyoléfines.

6. Enceinte de câbles ou matériau ignifugé selon l'une quelconque des revendications précédentes, dans lesquels la matière plastique comporte des matières plastiques recyclées après consommation.
